# EUROPÄISCHE PATENTSCHRIFT

(11) **EP 0 774 588 B1**
(45) Veröffentlichungstag und Bekanntmachung des Hinweises auf die Patenterteilung: **04.11.1998**
(21) Anmeldenummer: 96114756.8
(22) Anmeldetag: 14.09.1996
(51) Int. Cl.: F16B 13/12

(54) **Vorrichtung zur Montage eines Schlagankers**
Device for mounting a percussion dowel
Dispositif pour le montage d'une cheville à percussion

(30) Priorität: 15.11.1995 DE 29518109 U
(43) Veröffentlichungstag der Anmeldung: 21.05.1997
(73) Patentinhaber: fischerwerke Artur Fischer GmbH & Co. KG, D-72178 Waldachtal (DE)
(72) Erfinder: Fischer, Rainer, Dipl.-Ing. (FH), 72178 Waldachtal-Hörschweiler (DE)

(56) Entgegenhaltungen:
- EP-A- 0 056 854
- EP-A- 0 118 006
- US-A- 4 044 647

## Beschreibung

Die Erfindung betrifft einen Schlaganker mit einer Vorrichtung zur Montage des Schlagankers, der durch eine teilweise geschlitzte Hülse mit einer sich zum vorderen Ende hin verjüngenden und im hinteren Bereich ein Gewinde aufweisenden Innenbohrung gebildet ist, in die zur Verankerung des Schlagankers ein Spreizkörper mittels eines einen Dorn aufweisenden Einschlagwerkzeuges eintreibbar ist.

Ein Schlaganker der gattungsgemäßen Art ist beispielsweise aus der EP-A 0 056 854 bekannt. Zur Verankerung des Ankers wird der Spreizkörper in die sich verjüngende Innenbohrung der Hülse des Schlagankers eingetrieben. Aufgrund der Reibung ist das Einschlagen des Spreizkörpers in die Innenbohrung nur möglich, wenn die Hülse am Bohrloch abgestützt ist. Die Abstützung erfolgt entweder durch Aufsitzen der Hülse auf dem Bohrlochgrund oder durch einen an der Hülse angeformten Flansch, der auf der Außenseite des zu befestigenden Gegenstandes aufsitzt. Eine Abstützung am Bohrlochgrund ist jedoch nicht möglich, wenn der Schlaganker in einem plattenförmigen Befestigungsgrund mit durchgehender Aufnahmebohrung für den Schlaganker verankert werden soll.

Um möglichst kurze Schrauben für die Befestigung eines Gegenstandes verwenden zu können, werden die Schlaganker üblicherweise bündig mit der Außenfläche des Befestigungsgrundes gesetzt. Für das Setzen des Schlagankers ist somit die Herstellung einer Sacklochbohrung erforderlich, die mindestens der Länge des Schlagankers entspricht. Dies erfordert wiederum teurere Spezialwerkzeuge für die Herstellung des Bohrloches.

Als Variante ist daher in der EP-A 0 056 854 ein Schlaganker vorgeschlagen, dessen Hülse an seinem hinteren Ende einen umgebörtelten Rand aufweist. Durch diesen an der Außenfläche des zu befestigenden Gegenstandes anstoßenden Rand wird zwar ein Tieferrutschen der Hülse beim Eintreiben des Spreizkörpers verhindert, allerdings ergibt sich durch den Flansch eine nicht mehr lösbare Befestigung. Desweiteren wird durch unterschiedliche Dicke des zu befestigenden Gegenstandes die Verankerungstiefe des Schlagankers im Befestigungsgrund und damit dessen Haltewert verändert.

Der Erfindung liegt daher die Aufgabe zugrunde, eine Vorrichtung zu schaffen, mit der ein Schlaganker ohne spezielle Vorkehrungen zur Abstützung der Hülse des Schlagankers am Bohrloch gesetzt und verankert werden kann.

Die Lösung dieser Aufgabe wird durch die im Anspruch 1 angegebenen Merkmale erreicht.

Die Vorrichtung wird mit ihrem zylindrischen, ein Außengewinde aufweisenden Abschnitt in das Innengewinde der Hülse des Schlagankers soweit eingeschraubt, bis der Anschlagflansch der Vorrichtung an der hinteren Stirnfläche des Spreizankers anstößt. Mit der eingeschraubten Vorrichtung wird nunmehr der Schlaganker in das vorbereitete Bohrloch des Befestigungsgrundes soweit eingesetzt, bis der Anschlagflansch auf der Außenfläche des Befestigungsgrundes aufsitzt. Durch die Innenbohrung der Vorrichtung wird der Dorn eines Einschlagwerkzeuges eingeschoben und mit Hammerschlägen der Spreizkörper in die sich verjüngende Innenbohrung der Hülse des Schlagankers soweit eingetrieben, bis der Schlaganker ordnungsgemäß im Bohrloch des Befestigungsgrundes verankert ist. Der Anschlagflansch der Vorrichtung verhindert dabei ein Tieferrutschen des Schlagankers, sodaß dessen Verankerung auch bei durchgehenden Bohrlöchern im Befestigungsgrund möglich ist. Nach der Verankerung wird die Vorrichtung aus der Hülse des Schlagankers wieder ausgedreht, sodaß das Innengewinde zur lösbaren Befestigung eines Gegenstandes mittels einer Schraube verwendet werden kann. Da der Schlaganker keine speziellen Vorkehrungen zur Abstützung im Bohrloch benötigt, kann dieser in üblicher Weise auch durch Aufsitzen auf dem Bohrlochgrund verankert werden.

Durch die beim Eintreiben des Spreizkörpers unter Umständen auftretende Verspannung der Vorrichtung an der Außenfläche des Befestigungsgrundes kann ein Ausdrehen der Vorrichtung aus der Hülse erschwert werden. Es ist daher zweckmäßig, am Anschlagflansch der Vorrichtung Angriffsmittel für ein Drehwerkzeug vorzusehen.

In einer weiteren Ausgestaltung der Erfindung kann zwischen dem Anschlagflansch und dem Gewindeabschnitt ein zylindrischer Bund angeordnet sein, dessen Durchmesser etwa dem Durchmesser des Schlagankers entspricht. Mit diesem Bund ist es möglich, den Schlaganker im Bohrloch etwas tiefer zu setzen, sodaß nach der Verankerung des Schlagankers ein Abstand zwischen der Stirnseite des Schlagankers und der Mauerwerksoberfläche entsteht. Durch diesen Abstand kann beim Befestiguen eines Gegenstandes an der Mauerwerksoberfläche eine bessere Verspannung des zu befestigenden Gegenstandes selbst bei einer Hohllage erreicht werden.

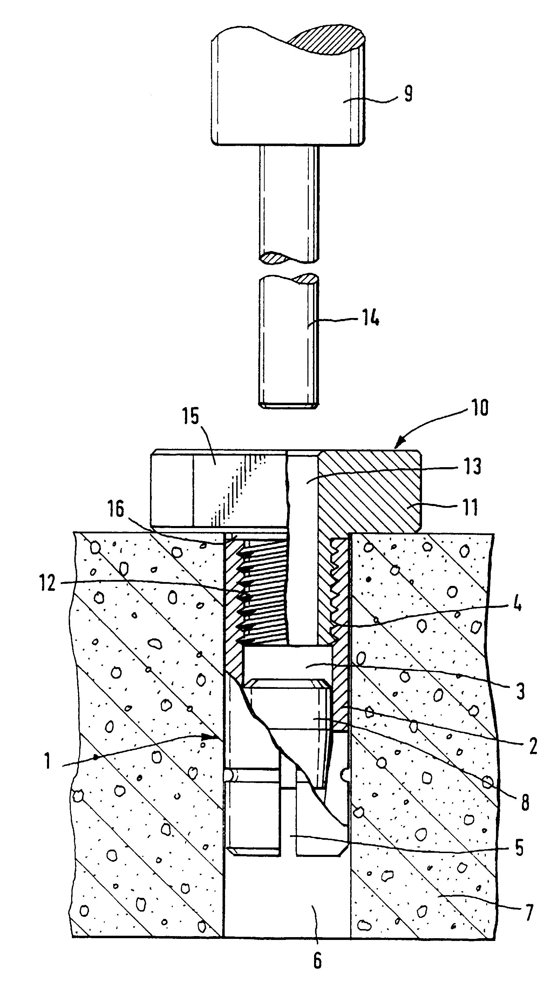

In der Zeichnung ist ein Ausführungsbeispiel der Erfindung dargestellt.

Der Schlaganker 1 besteht aus einer Metallhülse 2 mit Bohrung 3, die zum vorderen Ende hin konisch verjüngt ist. Im hinteren Bereich weist die Bohrung ein Innengewinde 4 auf. Zur Bildung eines Spreizbereiches ist die Hülse 2 mit von ihrem vorderen Ende ausgehenden und über einen Teil ihrer Länge sich erstreckenden Längsschlitzen 5 versehen. Zur Verankerung des Schlagankers 1 in einem Bohrloch 6 des Befestigungsgrundes 7 wird in die sich verjüngende Innenbohrung 3 der Hülse 2 ein Spreizkörper 8 mittels eines Einschlagwerkzeuges 9 eingetrieben.

Um ein Tieferrutschen des Schlagankers 1 beim Eintreiben des Spreizkörpers 8 zu verhindern, ist in das Innengewinde 4 der Hülse 2 eine Vorrichtung 10 mit einem Anschlagflansch 11 und einem sich daran anschließenden Gewindeabschnitt 12 eingeschraubt. Beim Setzen des Schlagankers 1 sitzt der Anschlagflansch 11 auf der Außenfläche des Befestigungsgrundes 7 auf, sodaß die Stirnfläche des Schlagankers 1 bündig mit der Außenfläche des Befestigungsgrundes 7 abschließt. Die Vorrichtung 10 ist mit einer durchgehenden Innenbohrung 13 versehen, durch die der Dorn 14 des Einschlagwerkzeuges 9 zum Einschlagen des Spreizkörpers 8 eingeschoben werden kann. Nach der Verankerung des Spreizankers 1 wird die Vorrichtung 10 aus der Innenbohrung 3 der Hülse 2 ausgedreht. Um für das Ausdrehen ein Drehwerkzeug verwenden zu können, ist der Anschlagflansch 11 im dargestellten Ausführungsbeispiel mit zwei sich gegenüberliegenden Schlüsselflächen 15 ausgebildet. Nach dem Ausdrehen der Vorrichtung 10 steht das Innengewinde 4 der Hülse 2 für die Befestigung eines Gegenstandes mittels einer Schraube (nicht dargestellt) zur Verfügung.

## Patentansprüche

1. Schlaganker (1) mit einer Vorrichtung (10) zur Montage des Schlagankers (1), der durch eine teilweise geschlitzte Hülse (2) mit einer sich zum vorderen Ende hin verjüngenden und im hinteren Bereich ein Gewinde (4) aufweisenden Innenbohrung (3) gebildet ist, in die ein Spreizkörper (8) mittels eines einen Dorn (14) aufweisenden Einschlagwerkzeuges (9) eintreibbar ist, **dadurch gekennzeichnet,** daß die Vorrichtung (10) einen Anschlagflansch (11) und einen sich an den Anschlagflansch anschließenden und in das Innengewinde (4) der Hülse (2) des Schlagankers (1) einschraubbaren Gewindeabschnitt (12) aufweist, und daß die Vorrichtung (10) mit einer durchgehenden Innenbohrung (13) versehen ist, deren Durchmesser größer ist als der Dorn (14) des Einschlagwerkzeuges (9).

2. Schlaganker (1) mit einer Vorrichtung nach Anspruch 1, **dadurch gekennzeichnet,** daß der Anschlagflansch (11) Angriffsmittel (15) für ein Drehwerkzeug aufweist.

3. Schlaganker (1) mit einer Vorrichtung nach Anspruch 1, **dadurch gekennzeichnet,** daß zwischen dem Anschlagflansch (11) und dem Gewindeabschnitt (12) ein zylindrischer Bund (16) angeordnet ist, dessen Durchmesser etwa dem Durchmesser des Schlagankers entspricht.

## Claims

1. Impact-type anchoring means (1) with a device (10) for installing the impact-type anchoring means (1), which is formed by means of a partially slotted sleeve (2) having an internal bore (3) which tapers towards the forward end and has a screw thread (4) in the rearward region, and into which an expansion body (8) is arranged to be driven by means of an impact tool (9) including a rod (14), **characterized in that** the device (10) has a stop flange (11) and a threaded portion (12) which is adjacent to the stop flange and is arranged to be screwed into the internal screw thread (4) of the sleeve (2) of the impact-type anchoring means (1), and in that the device (10) is provided with a through internal bore (13), the diameter of which is larger than the rod (14) of the impact tool (9).

2. Impact-type anchoring means (1) with a device according to Claim 1, **characterized in that** the stop flange (11) has engagement means (15) for a rotary tool.

3. Impact-type anchoring means (1) with a device according to Claim 1, **characterized in that** between the stop flange (11) and the threaded portion (12) there is arranged a cylindrical collar (16), the diameter of which corresponds approximately to the diameter of the impact-type anchoring means.

## Revendications

1. Cheville (1) à percussion équipée d'un dispositif (10) pour le montage de ladite cheville (1) à percussion, laquelle est formée par une douille (2) partiellement fendue et pourvue d'un perçage intérieur (3) qui se rétrécit en direction de l'extrémité antérieure, présente un filetage (4) dans la région postérieure, et dans lequel un corps d'écartement (8) peut être enfoncé au moyen d'un outil (9) d'introduction par percussion comportant une broche (14), caractérisée par le fait que le dispositif (10) comprend une collerette de butée (11) et un segment fileté (12) qui se rattache à ladite collerette de butée, et peut être vissé dans le filetage intérieur (4) de la douille (2) de la cheville (1) à percussion ; et par le fait que le dispositif (10) est muni d'un alésage intérieur ininterrompu (13) dont le diamètre est plus grand que celui de la broche (14) de l'outil (9) d'introduction par percussion.

2. Cheville (1) à percussion équipée d'un dispositif selon la revendication 1, caractérisée par le fait que la collerette de butée (11) présente des moyens (15) de venue en prise d'un outil tournant.

3. Cheville (1) à percussion équipée d'un dispositif selon la revendication 1, caractérisée par le fait qu'un collet cylindrique (16), dont le diamètre correspond sensiblement au diamètre de la cheville à percussion, est interposé entre la collerette de butée (11) et le segment fileté (12).
